(19) **Europäisches Patentamt**
**European Patent Office**
**Office européen des brevets**

(11) **EP 1 610 449 B1**

(12) **EUROPÄISCHE PATENTSCHRIFT**

(45) Veröffentlichungstag und Bekanntmachung des Hinweises auf die Patenterteilung:
**04.04.2007 Patentblatt 2007/14**

(51) Int Cl.:
*H02K 44/04* (2006.01)    *H02K 44/06* (2006.01)
*F01M 1/02* (2006.01)    *F01P 5/10* (2006.01)
*F01P 7/14* (2006.01)

(21) Anmeldenummer: **05104973.2**

(22) Anmeldetag: **08.06.2005**

(54) **Kraftfahrzeug mit einer elektromagnetischen Induktionspumpe**

Car having an electromagnetic induction pump

Véhicule automobile ayant une pompe à induction électro-magnétique

(84) Benannte Vertragsstaaten:
**DE ES FR GB**

(30) Priorität: **23.06.2004 DE 102004030264**

(43) Veröffentlichungstag der Anmeldung:
**28.12.2005 Patentblatt 2005/52**

(73) Patentinhaber: **ROBERT BOSCH GMBH**
**70442 Stuttgart (DE)**

(72) Erfinder:
• **Denne, Bernhard**
**77652, Offenburg (DE)**

• **Sarasa, Markus**
**77815, Buehl (DE)**

(56) Entgegenhaltungen:
**DE-A1- 1 678 571**    **US-A- 3 115 837**
**US-A- 3 757 846**    **US-A- 5 685 698**

• **TRATZ, H.; GRIGULL, U.: "Elektromagnetische Spiral-Induktionspumpe für Flüssigmetalle als Laboratoriumsgerät" CHEMIE-INGENIEUR-TECHNIK, Bd. 37, Nr. 1, 1965, Seiten 53-56, XP002347035 Verlag Chemie GmbH, Weinheim/Bergstr. (DE)**

**Beschreibung**

Die Erfindung geht von einem Kraftfahrzeug nach dem Oberbegriff des Anspruchs 1 aus, wie es allgemein bekannt ist.

Als Pumpenaggregate werden in Kraftfahrzeugen konventionelle Flügelradpumpen, Kolbenpumpen, Kreiselpumpen und Zahnradpumpen der verschiedensten Bauart eingesetzt. Einsatzgebiete sind beispielsweise Kühl- und Heizkreisläufe zum Kühlen und Erwärmen der Antriebsmaschine, z.B. eine Brennkraftmaschine, und des Fahrgastraums, ferner Schmiersysteme der Brennkraftmaschine und der daran angeschlossenen Aggregate, außerdem hydraulische Anlagen und Hilfseinrichtungen, z.B. eine Servolenkung, hydraulisch geregelte Dämpfer oder Arbeitsgeräte bei Nutzkraftfahrzeugen. Schließlich werden Pumpen auch für Scheibenwaschanlagen verwendet. Werden die Pumpen nicht unmittelbar von der Brennkraftmaschine mechanisch angetrieben, werden als Pumpenantrieb im Fahrzeugbereich überwiegend DC-Motoren angewandt. Dadurch können die Pumpen zwar unabhängig von der Brennkraftmaschine angesteuert und geregelt werden, jedoch ist eine erhöhte Anfälligkeit der Kohlebürsten und der Lager nachteilig, wodurch die Lebensdauer des Pumpenaggregats begrenzt ist. Weiterhin ist die Produktion dieser Pumpenantriebe komplex, was sich auch im Preis niederschlägt.

Aus der US 5 209 646 ist eine elektromagnetische Induktionspumpe bekannt, um flüssiges Metall oder andere, elektrisch leitfähige Flüssigkeiten zu fördern. Die Pumpe nutzt zum Erzeugen einer Pumpwirkung die so genannte "Lorentzkraft", die beim Zusammenwirken eines Gleichstroms und eines permanenten magnetischen Felds auf einen elektrischen Leiter wirkt und den Fluss der elektrisch leitfähigen Flüssigkeit verursacht. Das Permanentmagnetfeld wird von Permanentmagneten, vorzugsweise aus einer Legierung von Neodym, Eisen und Brom, erzeugt und ist senkrecht zur Förderrichtung der leitenden Flüssigkeit ausgerichtet. Ebenfalls quer zur Förderrichtung und quer zum magnetischen Feld ist eine Gleichstromspannung angelegt, sodass die leitende Flüssigkeit von einem Gleichstrom durchflossen wird. Die Induktionspumpe nach dem Stand der Technik wird zur Kühlung von Röntgenanlagen und für Computerchips verwendet.

Vorteile der Erfindung

Nach der Erfindung gemäß den Merkmalen des Anspruchs 1 wird bei einem Kraftfahrzeug als Einrichtung zum Fördern einer elektrisch leitenden Flüssigkeit eine Induktionspumpe eingesetzt, die die Flüssigkeit mithilfe der Lorentzkraft fördert, wobei die Fördergeschwindigkeit durch eine quer zum Förderstrom wirkende elektrische Spannung und/oder eine quer zum Förderstrom sowie zur elektrischen Spannung wirkende magnetische Feldstärke, die durch Elektromagnete erzeugt wird, geregelt wird.

Die erfindungsgemäße elektromagnetische Pumpe fördert die elektrisch leitenden Flüssigkeiten ohne sich bewegende mechanische Teile, sondern nur mithilfe der Lorentzkraft, die ausschließlich durch eine Gleichspannungsquelle und ein konstantes Magnetfeld erzeugt wird. Solche Pumpenantriebe können kostengünstig hergestellt werden. Ferner können die Gleichspannung und/oder das durch Elektromagnete erzeugte, konstante Magnetfeld entsprechend den Bedürfnissen geregelt werden, sodass immer ein optimaler Förderstrom zur Verfügung steht. Außerdem kann durch einfaches Umschalten der Spannungspotentiale oder des magnetischen Felds die Förderrichtung umgekehrt werden, was für manche Anwendungen vorteilhaft ist. Ein weiterer Vorteil ist, dass die elektromagnetische Induktionspumpe nahezu lautlos arbeitet, da sie auf Grund fehlender mechanischer Komponenten keine Vibrationen erzeugt. Sie arbeitet verschleißfrei. Ferner ergibt sich eine kontinuierliche, verlustarme und kavitationsfreie Strömung in strömungsgünstigen Kanälen.

Sofern die elektrische Leitfähigkeit der zu fördernden Flüssigkeit nicht befriedigend ist, wird gemäß einer Ausgestaltung der Erfindung vorgeschlagen, der Flüssigkeit Zusätze beizufügen, die die elektrische Leitfähigkeit verbessern. Mit solchen Zusätzen wird der Anwendungsbereich der erfindungsgemäßen elektromagnetischen Induktionspumpe vergrößert, sodass sie nicht nur zum Betrieb eines Heiz- bzw. Kühlsystems dienen, sondern auch für Scheibenreinigungsvorrichtungen und Schmierstoffsysteme geeignet sein kann.

Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination.

Der Fachmann wird die Merkmale zweckmäßigerweise auch einzeln betrachten und zu sinnvollen weiteren Kombinationen zusammenfassen.

Es zeigen:

Fig. 1 eine schematische Darstellung eines Kühl- und Heizkreislaufs eines Fahrzeugs mit einer Brennkraftmaschine,

Fig. 2 eine perspektivische Prinzipdarstellung einer elektromagnetischen Induktionspumpe und

Fig. 3 eine schematische Darstellung einer elektromagnetischen Induktionspumpe in einem Querschnitt quer zur Förderrichtung.

Beschreibung der Ausführungsbeispiele

Eine Brennkraftmaschine 12 für ein Kraftfahrzeug besitzt einen Zylinderkopf 52 und einen Zylinderblock 54 und ist an einem Kühl- und Heizungskreislauf 10 angeschlossen, in dem eine elektromagnetische Induktionspumpe 14 im normalen Betrieb ein Kühlmittel in Förderrichtung 36 fördert. Das Kühlmittel ist eine elektrisch leitende Flüssigkeit und strömt von der Brennkraftmaschine 12 über einen ersten Kühlmittelweg 28, eine Bypassleitung, direkt zur Brennkraftmaschine 12 zurück. Der erste Kühlmittelweg 28 wird benutzt, um die Brennkraftmaschine 12 schnell nach einem Kaltstart auf ihre Betriebstemperatur zu bringen. Parallel zur Bypassleitung 28 ist ein zweiter Kühlmittelweg 30 zu einem Hauptkühler 16 vorgesehen, der mit einem Lüfter 18 zusammenarbeitet. Ein Steuerventil 34, das an der Abzweigung des zweiten Kühlmittelwegs 30 angeordnet ist, verteilt den Kühlmittelstrom auf den Hauptkühler 16 und die Bypassleitung 28. Über einen dritten Kühlmittelweg 32 strömt das Kühlmittel von der Brennkraftmaschine 12 zu einem Heizungswärmetauscher 20 und von dort zur Brennkraftmaschine 12 zurück. Der Heizungswärmetauscher 20 dient dazu, Wärme für einen Fahrgastraum des nicht dargestellten Kraftfahrzeugs bereitzustellen.

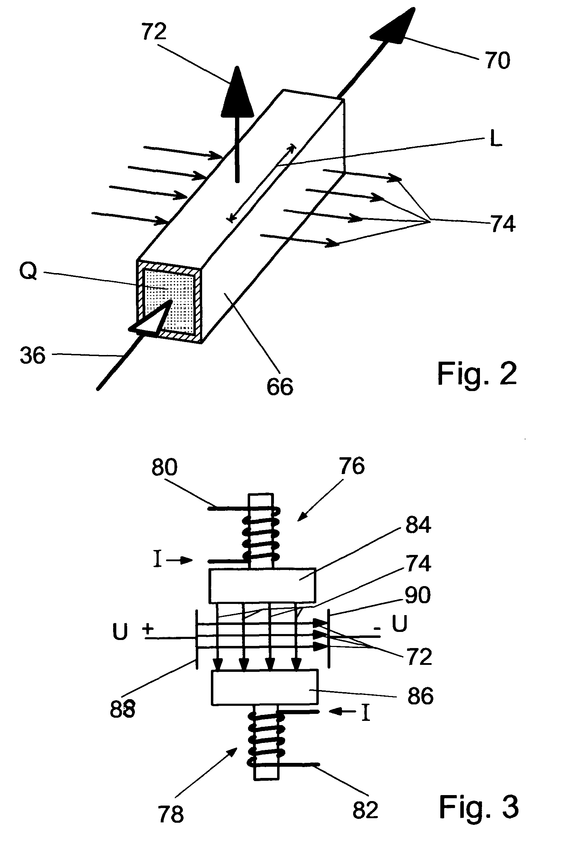

Der prinzipielle Aufbau der elektromagnetischen Induktionspumpe 14 ist in Fig. 2 und 3 dargestellt. In einem Leitungsabschnitt 66 befindet sich das elektrisch leitende Kühlmittel, das in Förderrichtung 36 gefördert wird. Dazu erzeugen Elektromagnete 76 und 78 quer zur Förderrichtung auf einer Länge L ein magnetisches Feld 74. Ferner ist an zwei einander gegenüber liegenden Elektroden 88, 90 eine Gleichspannung U angelegt, unter deren Einfluss durch das elektrisch leitende Kühlmittel ein Strom fließt, dessen Stromvektor 72 senkrecht zur Förderrichtung 36 und senkrecht zum magnetischen Feld 74 verläuft. Durch den Stromvektor 72 und das magnetische Feld 74 wird auf die elektrischen Ladungsträger Q der Kühlflüssigkeit eine Kraft ausgeübt, eine so genannte Lorentzkraft, deren Kraftvektor mit 70 bezeichnet ist. Die in Fig. 2 dargestellte Förderrichtung 36 entspricht einem Stromfluss I durch die Spulen 80, 82 der Elektromagnete 76 bzw. 78 gemäß Fig.3. Dabei wird an einem Pol 84 des Elektromagneten 76 ein magnetischer Nordpol und an einem Pol 86 des Elektromagneten 78 ein magnetischer Südpol erzeugt. Durch Verändern der durch die Spulen 80, 82 fließenden Stromstärke und/oder der Spannung U lassen sich die Geschwindigkeit des Kühlmediums und damit das Fördervolumen ändern. Für die Geschwindigkeit gilt folgende Formel:

$$v = \sqrt{2\mu\mu_0 LUII / d\rho R'}$$

v     mittlere Durchschnittsgeschwindigkeit der leitenden Kühlflüssigkeit am Ausgang der Induktionspumpe 14,
$\mu$     relative Permeabilität der leitenden Kühlflüssigkeit,
$\mu_0$     Vakuumpermeabilität,
L     Länge des Pumpenkanals,

U     Spannung an den Elektroden,
H     magnetische Feldstärke,
d     Abstand zwischen den Elektroden 88, 90,
$\rho$     Dichte der Flüssigkeit,
R'     Widerstand der Flüssigkeit.

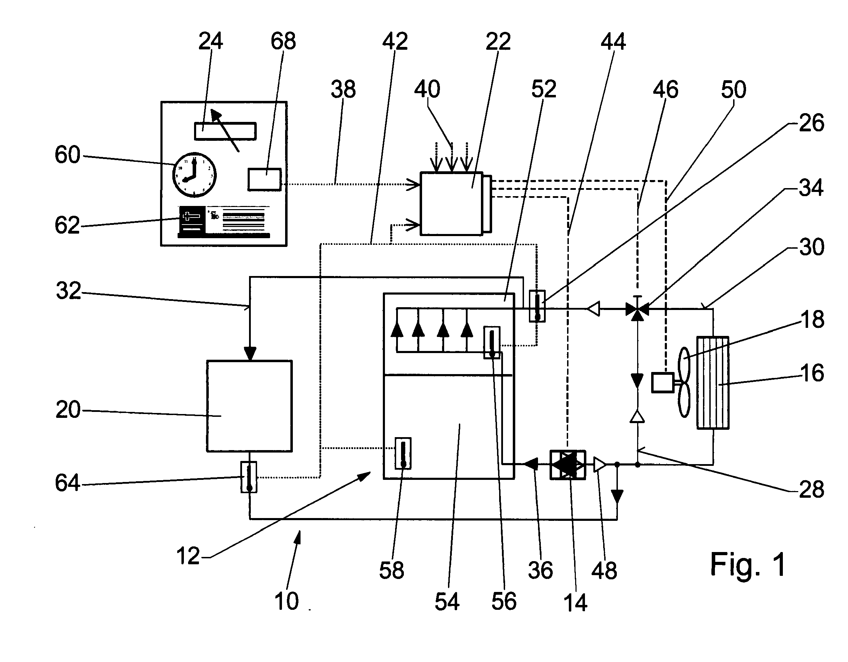

Wie aus der Formel ersichtlich, kann die Fördergeschwindigkeit v des Kühlmittels und damit das Fördervolumen durch die Spannung U oder die magnetische Feldstärke H mittels der durch die Spulen 80, 82 fließenden Stromstärke verändert werden. Wird die Spannung an den Elektroden 88, 90 umgeschaltet oder die Richtung des Stromflusses in den Spulen 80, 82 umgekehrt, wird die Kühlflüssigkeit in einer zur Förderrichtung 36 entgegengesetzten Förderrichtung 48 gefördert (Fig. 1).
Die Volumenströme im Kühl- und Heizkreislauf 10 der Brennkraftmaschine 12 werden mithilfe einer Steuereinheit 22 geregelt. Dazu empfängt die Steuereinheit 22 Daten über direkte Signalleitungen oder über einen Datenbus, beispielsweise CAN (Control Area Network) oder LAN (Local Area Network), und verarbeitet diese zu Ausgangssignalen 44, 46, 50 für die Stelleinrichtungen des Kühl- und Heizkreislaufs 10. Als Eingangssignale 38, 40 werden der Steuereinheit 22 Betriebs- und Umgebungsparameter zugeführt, wie beispielsweise die Drehzahl, die Last und die Temperatur der Brennkraftmaschine 12, die Geschwindigkeit des Fahrzeugs sowie die Temperatur der Umgebungsluft und des Fahrgastraums usw. Solche Signale können von einer Bedienungseinrichtung 24, einer Borduhr 60, einem Bordcomputer 62 und/oder einem Navigationsgerät 68 geliefert werden. Auch die Temperatur des Kühlmittels wird als Eingangssignal 42 zur Steuereinheit 22 übertragen, wobei diese an mehreren Positionen im Kühl- und Heizkreislauf 10 erfasst wird. So misst ein Temperatursensor 64 die Temperatur des Kühlmittels im dritten Kühlmittelweg 32 im Bereich des Heizungswärmetauschers 20, während ein Temperatursensor 26 die Temperatur am Ausgang der Brennkraftmaschine 12 und ein weiterer Temperatursensor 56 die Temperatur am Eintritt des Kühlmittels in den Zylinderkopf 52 misst. Ein Temperatursensor 58 ermittelt die Schmieröltemperatur im Zylinderblock 54.
Um die Erwärmung der Brennkraftmaschine 12 zu beschleunigen, indem der Wärmefluss vom heißeren Zylinderkopf 52 zum kälteren Zylinderblock 54 verkürzt wird, wird die Förderrichtung der Induktionspumpe 14 zeitweise umgekehrt, indem beispielsweise die Spannung U an den Elektroden 88, 90 umgepolt wird. Die Induktionspumpe 14 fördert dann das Kühlmittel in Strömungsrichtung 48 über die Bypassleitung 28 zum Zylinderkopf 52. Das Kühlmittel transportiert die bei der Verbrennung des Kraftstoffs entstehende Abwärme direkt vom Zylinderkopf 52 auf kurzem Weg in den Bereich des Zylinderblocks 54.

**Patentansprüche**

1. Kraftfahrzeug, das von einer Brennkraftmaschine (12) angetrieben wird und mindestens eine Einrichtung (14) zum Fördern einer elektrisch leitenden Flüssigkeit besitzt, **dadurch gekennzeichnet, dass** die Einrichtung eine elektromagnetische Induktionspumpe (14) ist, die die Flüssigkeit mithilfe der Lorentzkraft fördert, und dass die Fördergeschwindigkeit durch eine quer zum Förderstrom (36, 48) wirkende elektrische Spannung (U) und/oder eine quer zum Förderstrom (36, 48) sowie der elektrischen Spannung (U) wirkende magnetische Feldstärke (B), die durch Elektromagnete (76, 78) erzeugt wird, geregelt wird.

2. Kraftfahrzeug nach Anspruch 1, **dadurch gekennzeichnet, dass** der Flüssigkeit Zusätze beigefügt sind, die die elektrische Leitfähigkeit verbessern.

3. Kraftfahrzeug nach Anspruch 1 oder 2, **dadurch gekennzeichnet, dass** die Flüssigkeit zum Betrieb eines Heiz- bzw. Kühlsystems (10) dient.

4. Kraftfahrzeug nach Anspruch 1 oder 2, **dadurch gekennzeichnet, dass** die Flüssigkeit zum Betrieb einer Scheibenreinigungsvorrichtung dient.

5. Kraftfahrzeug nach einem der vorhergehenden Ansprüche 1 bis 3, **dadurch gekennzeichnet, dass** die Flüssigkeit ein Schmierstoff zum Betrieb der Brennkraftmaschine (12) oder eines Aggregats ist.

6. Kraftfahrzeug nach einem der vorhergehenden Ansprüche 1 bis 3 oder 5, **dadurch gekennzeichnet, dass** die Flüssigkeit eine Hydraulikflüssigkeit ist, die zum Betrieb einer hydraulischen Vorrichtung dient.

7. Kraftfahrzeug nach einem der vorhergehenden Ansprüche, **dadurch gekennzeichnet, dass** die elektrische Spannung (U) und/oder die magnetische Feldstärke von einer elektronischen Steuereinheit (22) des Kraftfahrzeugs oder der Brennkraftmaschine (12) in Abhängigkeit von Betriebsparametern und/oder Umgebungsparametern geregelt werden.

**Claims**

1. Motor vehicle which is driven by an internal combustion engine (12) and has at least one device (14) for feeding an electrically conductive fluid, **characterized in that** the device is an electromagnetic induction pump (14) which feeds the fluid by means of the Lorentz force, and **in that** the feed rate is controlled by an electric voltage (U) which acts transversely with respect to the feed current (36, 48) and/or a magnetic field strength (B) which acts transversely with respect to the feed current (36, 48) and the electric voltage (U) and is generated by electromagnets (76, 78).

2. Motor vehicle according to Claim 1, **characterized in that** the fluid has additives which improve the electrical conductivity.

3. Motor vehicle according to Claim 1 or 2, **characterized in that** the fluid is used to operate a heating or cooling system (10).

4. Motor vehicle according to Claim 1 or 2, **characterized in that** the fluid is used to operate a windscreen or headlight washing device.

5. Motor vehicle according to one of the preceding Claims 1 to 3, **characterized in that** the fluid is a lubricant for operating the internal combustion engine (12) or an assembly.

6. Motor vehicle according to one of the preceding Claims 1 to 3 or 5, **characterized in that** the fluid is a hydraulic fluid which is used to operate a hydraulic device.

7. Motor vehicle according to one of the preceding claims, **characterized in that** the electric voltage (U) and/or the magnetic field strength is controlled by an electronic control unit (22) of the motor vehicle or of the internal combustion engine (12) as a function of operating parameters and/or ambient parameters.

**Revendications**

1. Véhicule automobile entraîné par un moteur à combustion interne (12) et possédant au moins un dispositif (14) pour faire circuler un liquide conducteur de l'électricité,
**caractérisé en ce que**
le dispositif est une pompe d'induction (14) électromagnétique qui refoule le liquide par l'effet de la force de Lorentz, la vitesse de refoulement étant régulée par l'intermédiaire d'une tension électrique (U) agissant perpendiculairement au courant de refoulement (36, 48) et/ou par un champ magnétique (B) produit par des électroaimants (76, 78), perpendiculairement au courant de refoulement (36, 48) ainsi qu'à la tension électrique (U).

2. Véhicule automobile selon la revendication 1,
**caractérisé en ce que**
le liquide contient des additifs augmentant sa conductibilité électrique.

3. Véhicule automobile selon la revendication 1 ou 2,

**caractérisé en ce que**
le liquide sert à faire fonctionner un système de chauffage ou de refroidissement (10).

4. Véhicule automobile selon la revendication 1 ou 2, **caractérisé en ce que** le liquide sert à faire fonctionner un dispositif de nettoyage de vitres.

5. Véhicule automobile selon une des revendications 1 à 3, **caractérisé en ce que** le liquide est un lubrifiant servant à faire fonctionner le moteur à combustion interne (12) ou un équipement du véhicule.

6. Véhicule automobile selon une des revendications 1 à 3 ou 5, **caractérisé en ce que** le liquide est un liquide hydraulique qui sert à faire fonctionner un dispositif hydraulique.

7. Véhicule automobile selon une des revendications précédentes, **caractérisé en ce que** la tension électrique (U) et/ou le champ magnétique sont réglés par une unité de commande (22) du véhicule ou du moteur (12) en fonction de paramètres de fonctionnement et/ ou de paramètres d'environnement.

Fig. 1

72

70

L

74

Q

36

66

Fig. 2

80

76

84

74

90

I →

U +

− U

72

88

86

78

82

Fig. 3